# EUROPÄISCHE PATENTANMELDUNG

(11) **EP 0 915 355 A2**
(43) Veröffentlichungstag der Anmeldung: **12.05.1999**
(21) Anmeldenummer: 98119529.0
(22) Anmeldetag: 15.10.1998
(51) Int. Cl.: G02B 6/38

(54) **Verfahren und Herstellung einer glatten Stirnfläche bei einer Kunststoff-Lichtleitfaser und optische Steckverbindung**

(30) Priorität: 04.11.1997 DE 19748701
(71) Anmelder: SIEMENS AKTIENGESELLSCHAFT, 80333 München (DE)
(72) Erfinder: Bauer, Jürgen, 68159 Mannheim (DE)

(57) **Zusammenfassung**

Es wird ein Verfahren zur Herstellung einer glatten Stirnfläche bei einer Kunststoff-Lichtleitfaser vorgeschlagen, bei dem ein Endbereich der Lichtleitfaser unter zum Schmelzen des Endbereiches führender Temperaturerhöhung gegen ein plattenförmiges Gegenstück gedrückt wird und der Lichtleitfaser zur Erhitzung Schwingungsenergie zugeführt wird. Es ist eine optische Steckverbindung vorgesehen mit einer glatten Stirnfläche zur Einkopplung von Licht.

## Beschreibung

Die vorliegende Erfindung betrifft ein Verfahren zur Herstellung einer glatten Stirnfläche bei einer Kunststoff-Lichtleitfaser nach dem Oberbegriff des Anspruches 1. Die Erfindung betrifft auch eine optische Steckverbindung mit einer Stirnfläche nach diesem Verfahren zur Einkopplung von Licht nach Anspruch 10 und eine hierzu vorgesehene Sonotrode nach Anspruch 11.

Zur Übertragung von Signalen oder Daten werden anstelle von beispielsweise Koaxialkabeln heute bereits oft Kunststoff-Lichtwellenleiter eingesetzt, die gegenüber den Koaxialkabeln viele Vorteile, wie beispielsweise die Unempfindlichkeit gegenüber elektromagnetische Störungen besitzen, ein geringes Gewicht aufweisen und aufgrund ihrer Edelmetallfreiheit kostengünstig sind.

Eine solche Übertragung besitzt aber auch einen Nachteil insofern, als daß der Übergang zum Lichtwellenleiter, beispielsweise eine optische Steckverbindung, eine hohe Dämpfung aufweist, wenn die Lichtleitfaser Störstellen in der Form von Verunreinigungen oder einer unebenen Stirnfläche aufweist.

Zur Beseitigung des Problems unebener Stirnflächen wird auf der Basis unterschiedlicher Verfahren versucht, bei der Herstellung der optischen Steckverbindung möglichst glatte Stirnflächen zu erhalten.

Hierzu ist es bekannt, die Lichtleitfaser mit einer Schneideeinrichtung abzutrennen, die eine möglichst glatte Schnittfläche hinterläßt, wobei hierzu beispielsweise ein Trennschnitt mit einem heißen Messer oder aber ein Trennschnitt mit einem Laser erfolgen kann. Auch ist es möglich, eine unebene Schnittfläche nachträglich zu polieren, wodurch aber wieder die Gefahr von Unebenheiten aufgrund des Poliervorganges hervorgerufen wird.

Es ist auch bereits ein anderes Verfahren bekannt geworden, welches eine sogenannte "Hot Plate" einsetzt. Dabei wird das abgetrennte Ende der Lichtleitfaser auf eine polierte erwärmte Fläche gedrückt, so daß das Ende des Lichtleiters schmilzt. Nach dem Schmelzen wird die Fläche abgekühlt, so daß der Kunststoffwerkstoff der Lichtleitfaser wieder erstarrt. Diese Vorgehensweise nimmt dabei für die Bearbeitung einer einzelnen Lichtleitfaser eine Bearbeitungszeit von etwa 50 Sekunden in Anspruch. Diese Bearbeitungszeit bestimmt die Taktzeit einer automatischen Vorrichtung, die zur Serienfertigung solcher optischer Steckverbindungen eingesetzt werden kann.

Der vorliegenden Erfindung liegt nun die Aufgabe zugrunde, ein Verfahren zu schaffen, mit dem in deutlich kürzerer Zeit Lichtleitfasern mit glatten Stirnflächen versehen werden können, die die Übergangsverluste bei der Einkoppelung von Licht in die Lichtleitfaser möglichst gering halten. Auch soll eine optische Steckverbindung mit einer Lichtleitfaser mit einer glatten Stirnfläche geschaffen werden.

Die Erfindung weist zur Lösung dieser Aufgabe hinsichtlich des Verfahrens die im Anspruch 1 angegebenen Merkmale auf. Vorteilhafte Verfahrensausgestaltungen sind in den weiteren Ansprüchen angegeben. Die Erfindung weist zur Lösung dieser Aufgabe hinsichtlich der Steckverbindung die im Anspruch 10 angegebenen Merkmale auf. Eine hierzu vorgesehene Ultraschall-Sonotrode weist die Merkmale nach Anspruch 11 und 12 auf.

Erfindungsgemäß wird daher ein Verfahren zur Herstellung einer glatten Stirnfläche bei einer Kunststoff-Lichtleitfaser vorgeschlagen, bei dem ein Endbereich der Lichtleitfaser unter zum Schmelzen des Endbereiches führender Temperaturerhöhung gegen ein plattenförmiges Gegenstück gedrückt wird und der Lichtleitfaser zur Erhitzung Schwingungsenergie zugeführt wird.

Das Verfahren nach der Erfindung unterscheidet sich daher von dem bekannten Verfahren darin, daß zum Schmelzen des Kunststoffes der Lichtleitfaser nicht eine elektrische Heizung zur berührungsbehafteten Wärmeübertragung eingesetzt wird, sondern die zum Schmelzen erforderliche Energie als Schwingungsenergie an die Lichtleitfaser übertragen wird.

Die zugeführte hochfrequente Schwingungsenergie ruft in der Lichtleitfaser innere Reibung hervor, die zu einer Erwärmung des zu schmelzenden Endbereiches führt, die bis zum Aufschmelzen führt. Hierbei wird der zu schmelzende Endbereich gegen ein plattenförmiges Gegenstück gedrückt gehalten, über das auch die Schwingungsenergie in den Endbereich eingekoppelt wird.

Dieses Verfahren hat gegenüber dem bekannten Verfahren der Verwendung einer elektrischen Heizplatte oder dergleichen den Vorteil geringeren Energieverbrauches, da die bis zum Schmelzen der Lichtleitfaser gehende Erhitzung der Heizplatte wegfällt. Auch läßt sich hiermit eine beträchtliche Verkürzung der Bearbeitungszeit des Endbereiches der Lichtleitfaser erzielen, da bei dem bekannten Verfahren die zuerst erhitzte Heizplatte nach dem Schmelzen der Lichtleitfaser wieder abgekühlt werden muß, um die Erstarrung der umgeschmolzenen Lichtleitfaser zu bewirken, denn diese muß während der Abkühlung mit der dann als Kühlplatte wirkenden Heizplatte in Kontakt bleiben, da es bei der geschmolzenen Lichtleitfaser andernfalls zum Ziehen von Fäden aus dem Kunststoffwerkstoff und damit wieder zu einer unebenen Stirnfläche kommt.

Dahingegen wird nach dem erfindungsgemäßen Verfahren das plattenförmige Gegenstück nicht erhitzt, denn die Schmelzenergie wird in die Lichtleitfaser als hochfrequente Schwingungsenergie eingekoppelt, so daß das Gegenstück kalt bleiben kann und nach dem Umschmelzen des Endbereiches die dann im Endbereich vorhandene Wärme ableiten kann. Während des Abkühlvorganges bleibt das Gegenstück mit dem umgeschmolzenen Endbereich der Lichtleitfaser in Kontakt, so daß sich die Oberfläche des Gegenstückes auf dem Endbereich abdrückt. Hierzu weist das Gegenstück vorzugsweise eine hochglanzpolierte Oberfläche mit sehr geringen Rauhtiefen auf.

Nach einer Ausführungsform des Verfahrens ist es vorgesehen, daß die Schwingungsenergie in die Lichtleitfaser von einer Sonotrode über eine plattenförmige Gegenfläche eingekoppelt wird, wobei die Sonotrode vorzugsweise eine Ultraschall-Sonotrode ist.

Der über die Sonotrode in die Lichtleitfaser eingekoppelte Ultraschall führt über die vorstehend beschriebene Wirkungsweise in dem Endbereich zur Erwärmung bis zur Schmelztemperatur des Kunststoffes. Über eine Druckbeaufschlagung des Endbereiches der Lichtleitfaser während der Zufuhr der Schwingungsenergie und des gesamten Schmelzvorganges sowie des sich anschließenden Abkühlvorganges bis zur Erstarrungstemperatur des Kunststoffes wird die hochgradig ebene Oberfläche der Sonotrode auf die Lichtleitfaser abgebildet, an der sich hierdurch ein sogenannter Nagelkopf ausbildet mit einer glatten Stirnfläche, über den dann mit ausgesprochen geringen Übergangsverlusten Licht in den Lichtwellenleiter eingekoppelt werden kann.

Nach einer Modifikation des erfindungsgemäßen Verfahrens ist es vorgesehen, daß die Gegenfläche auf eine Temperatur unterhalb der Schmelztemperatur der Lichtleitfaser vorgeheizt wird. Es bedeutet dies, daß durch das Vorheizen der Sonotrodenfläche, an der der Endbereich der Lichtleitfaser zur Anlage kommt, bereits eine vorbestimmte Erwärmung dieses Endbereiches erreicht wird, so daß die Taktzeit für das Einkoppeln von Schwingungsenergie in den Endbereich und damit die Bearbeitungszeit nochmals verringert werden kann. Da die Sonotrodenfläche nicht auf eine Schmelztemperatur des Kunststoffes erwärmt wird, wird hierdurch die Abkühlzeit bis zur Erstarrung der Lichtleitfaser nicht wesentlich negativ beeinflußt. Dadurch ist es aber möglich, die Heizzeit weiter zu verkürzen. Nach einer weiteren Modifikation ist es auch vorgesehen, eine zusätzliche Kühlung des Endbereiches der Lichtleitfaser an der Sonotrode über eine Kühleinrichtung an der Sonotrodenfläche zu bewirken, wobei neben der Kühleinrichtung an der Sonotrodenfläche auch eine Heizeinrichtung zum Vorheizen und anschließenden schnellen Abkühlen vorgesehen sein kann.

Es hat sich gezeigt, daß es nach diesem Verfahren möglich ist, die Zeitdauer für die Energiezufuhr an den Endbereich der Lichtleitfaser auf etwa eine Sekunde zu verkürzen, d.h. gegenüber der Heizzeit nach dem bekannten Verfahren von etwa 20 Sekunden erbringt das hier vorgestellte Verfahren eine deutliche Verringerung der Bearbeitungszeit.

Als vorteilhaft hat sich herausgestellt, daß der Endbereich der Lichtleitfaser während der Erhitzung und bis zur Erstarrung über die Gegenfläche mit einer Kraft im Bereich von etwa 1 Newton bis 10 Newton auf Druck beaufschlagt wird.

Hierbei wird der vorstehend erwähnte Nagelkopf geschaffen, da sich die glatte Oberfläche der Sonotrodenfläche auf dem umgeschmolzenen Endbereich der Lichtleitfaser abbildet.

Der kegelstumpfförmige Nagelkopf nimmt dabei nach der Erstarrung den Raum einer Erweiterung einer Bohrung einer Aufnahme ein, in die die Lichtleitfaser vor der Erhitzung eingeführt wird.

Mit dem erfindungsgemäßen Verfahren lassen sich kurze Taktzeiten für die automatische Konfektionierung von optischen Steckverbindern erzielen. Durch den Wegfall einer erwärmten Heizplatte kann auch die Abkühlzeit beträchtlich reduziert werden, da die Prozeßumkehr zuerst Heizen und dann Kühlen der Gegenfläche nicht mehr notwendig ist. Da der Endbereich der Kunststoff-Lichtleitfaser nicht mehr über Kontakterwärmung zum Schmelzen gebracht wird, fallen keine Schmelzemissionen mehr an. Auch wird der Wartungsaufwand einer automatischen Verarbeitungsmaschine verringert, da die Sonotrode wartungsfrei arbeitet. Durch den Wegfall der Beheizung der Gegenfläche bis zur Schmelztemperatur der Lichtleitfaser kann die Energie eingespart werden, die aufgrund der Wärmekapazität der zu beheizenden Gegenfläche zu deren Aufheizung benötigt werden würde.

Die Erfindung wird im folgenden anhand der Zeichnung näher erläutert. Diese zeigt in:
- Fig. 1a: eine schematische Darstellung zur Erläuterung der Vorgehensweise bei der Herstellung einer glatten Stirnfläche an einer Lichtleitfaser aus Kunststoff zur Fertigung einer optischen Steckverbindung in einem ersten Schritt im Verfahrensablauf; und
- Fig. 1b: in einem zweiten Schritt im Verfahrensablauf;
- Fig. 2: schematisch die nach dem Verfahrensablauf nach Fig. 1a und Fig. 1b gefertigte optische Steckverbindung; und
- Fig. 3: in einer perspektivischen Darstellung eine optische Steckverbindung mit einer Lichtleitfaser mit glatter Stirnfläche, die nach dem erfindungsgemäßen Verfahren hergestellt worden ist.

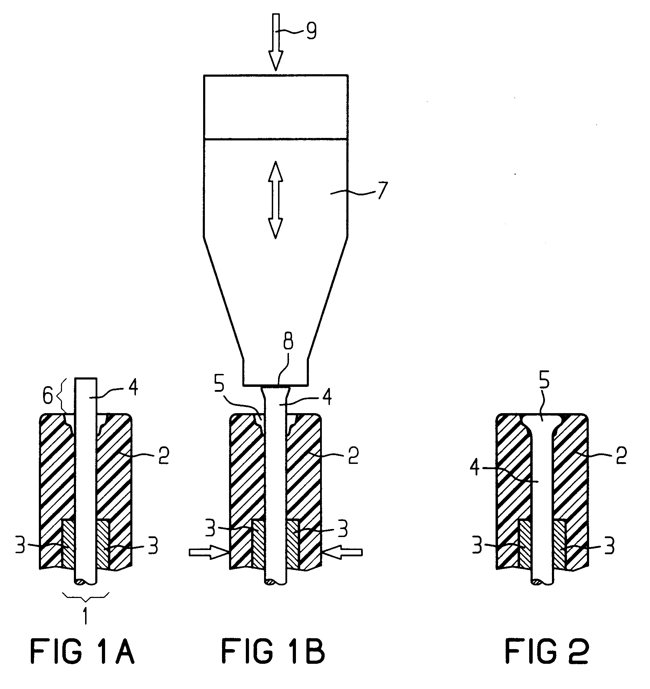

In Fig. 1a ist anhand einer schematischen Schnittdarstellung eine Lichtwellenleiterader 1, bestehend aus einer Lichtleitfaser 4 und einem Mantel 3 mit einer Aufnahme 2 dargestellt.

Die Aufnahme 2 dient der Aufnahme der Lichtwellenleiterader 1 und als ein Bauteil einer optischen Steckverbindung.

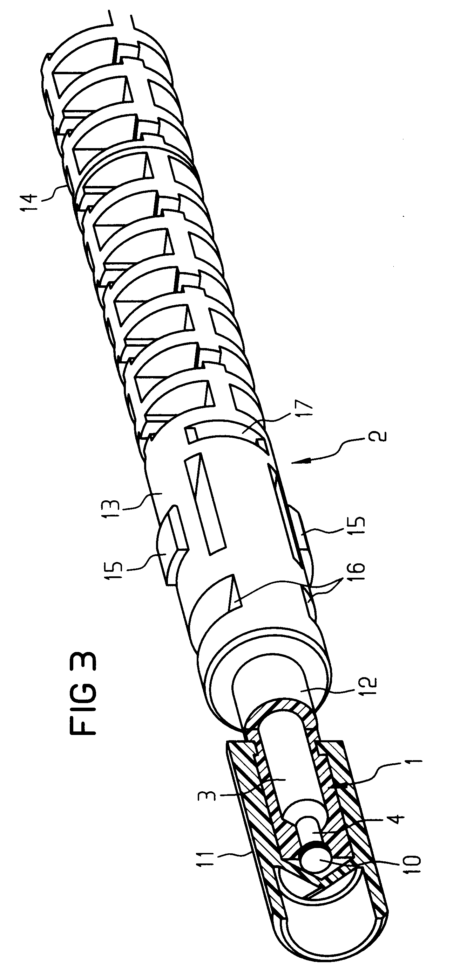

Wie leicht anhand der Zeichnung ersichtlich und in Fig. 3 detaillierter dargestellt, besitzt die Aufnahme 2 eine durchgehende Bohrung, in die eine Lichtwellenleiterader 1 mit ihrem Mantel 3 eingeführt werden kann. Innerhalb des Mantels 3 verläuft die Lichtleitfaser 4, die sich bei noch nicht hergestellter glatter Stirnfläche etwa 0.5 mm über die Stirnseite der Aufnahme 2 hinaus erstreckt (siehe Fig. 1a).

Dieser Überstand 6 nimmt nach der Plastifizierung und Erstarrung eine Erweiterung 5 an der Stirnseite der Aufnahme 2 ein, wobei sich dies näher aus Fig. 2 der Zeichnung ergibt. Nach der Erstarrung bildet der umgeschmolzene Endbereich der Lichtleitfaser 4 den sogenannten Nagelkopf 10 aus, wie es insbesondere in Fig. 2 dargestellt ist.

Wie es leicht aus Fig. 1a ersichtlich ist, wird die Lichtleitfaser 4 in der Aufnahme 2 mit dem bereits beschriebenen Überstand 6 angeordnet und sodann die Aufnahme 2 in einer nicht näher dargestellten Halterung fixiert, wobei dies durch in seitlichen Pfeile nach Fig. 1b dargestellt ist.

In einem nächsten Arbeitsgang wird auf die Lichtleitfaser 4 eine Sonotrode 7 abgesenkt derart, daß die Gegenfläche 8 der Sonotrode 7 mit dem Überstand 6 in Kontakt kommt. In einem nächsten Arbeitsschritt wird die Sonotrode 7 in Betrieb gesetzt, so daß über die Gegenfläche 8 in den dieser gegenüberliegenden Endbereich der Lichtleitfaser Schwingungsenergie in der Form eines hochfrequenten Ultraschalls eingekoppelt wird. Es hat sich gezeigt, daß eine thermische Plastifizierung des Kunststoffwerkstoffes hinsichtlich der von der Sonotrode 7 emittierten Anregungsfrequenz vom Werkstoff der Lichtleitfaser 4 abhängig ist. Das Spektrum der eingesetzten Anregungsfrequenz beginnt bei etwa 20 kHz und liegt vorzugsweise bei etwa 40 kHz und weiter vorzugsweise bei höheren Frequenzen von beispielsweise 70 kHz und mehr.

Aufgrund der Ultraschallanregung über die Sonotrode 7 erreicht der Endbereich der Lichtleitfaser 4 über innere Reibung schnell seine Schmelztemperatur. Während der Anregung wird die Sonotrode 7 in Richtung zur Lichtleitfaser 4 mit Druck beaufschlagt, wie dies durch den Pfeil 9 angedeutet ist. Gleichzeitig wird die Sonotrode 7 in Richtung zur Aufnahme 2 hin bewegt, bis die Gegenfläche 8 an der Stirnfläche der Aufnahme 2 aufliegt. Während dieser Verschiebebewegung der Sonotrode schmilzt der Überstand 6 der Lichtleitfaser 4 an und wird von der Gegenfläche 8 in die Erweiterung 5 der Aufnahme 2 hinein gedrückt und füllt diese weitgehend aus.

Nach dem Ende der Anregung und Verschiebung der Sonotrode 7 beginnt der umgeschmolzene Endbereich 5 der Lichtleitfaser 4 zu erstarren, wobei während der zur Erstarrung führenden Abkühlung der Kontakt zwischen Gegenfläche 8 und dem Endbereich 5 aufrechterhalten wird, wodurch sich die mit optischer Güte polierte Gegenfläche 8 im Endbereich 5 abbildet, d.h. der Endbereich 5 erhält eine vollkommen glatte und mit der Stirnfläche der Aufnahme 2 bündig abschließende Stirnfläche. Hierzu ist die Gegenfläche 8 der Sonotrode 7 vorzugsweise mit einer Antihaftbeschichtung versehen, also einer Beschichtung, die verhindert, daß der geschmolzene Kunststoffwerkstoff an der Gegenfläche 8 haften bleibt.

Fig. 3 der Zeichnung zeigt eine optische Steckverbindung mit einer Lichtleitfaser 4 mit glatter Stirnfläche nach dem erfindungsgemäßen Verfahren.

Über der Stirnfläche (Nagelkopf 10) befindet sich eine Schutzkappe 11 angeordnet, beispielsweise aus einem Elastomer. Die Lichtwellenleiterader 1 verläuft innerhalb einer rohrstückförmigen Verlängerung 12 der Aufnahme 2. Die Aufnahme 2 ist bei dem dargestellten Ausführungsbeispiel einer optischen Steckverbindung als Ferrule oder Insert 13 mit einem Knickschutz 14 an dem vom Nagelkopf 10 abgewandten Bereich ausgebildet.

Darüber hinaus besitzt das Insert 13 Rastnocken 15 zur Fixierung an einem nicht näher dargestellten Befestigungsbauteil sowie Nuten 16 zu einer zusätzliche Sicherung des Inserts 13 an einem Befestigungsbauteil.

Etwas hinterhalb der Rastnocken 15 ist am Insert 13 eine Aufnahme 17 zur Einführung eines Klemmbügels vorgesehen, der als Fixierung und Zugsicherung für die Lichtwellenleiterader 1 in dem Insert 13 dient.

Aufgrund der Kürze der für die Herstellung der glatten Stirnfläche an der Lichtleitfaser 4 erforderlichen Bearbeitungszeit ist das Verfahren insbesondere zum Einsatz an einem Verarbeitungsautomaten geeignet. Dieser ermöglicht eine schnelle und damit kostengünstige Herstellung einer optischen Steckverbindung, die beispielsweise als optische Steckverbindung in der Automobiltechnik zum Einsatz kommen kann.

Hinsichtlich vorstehend im einzelnen nicht näher erläuterter Merkmale der Erfindung wird in übrigen ausdrücklich auf die Ansprüche und die Zeichnung verwiesen.

## Patentansprüche

1. Verfahren zur Herstellung einer glatten Stirnfläche bei einer Kunststoff-Lichtleitfaser, bei dem ein Endbereich der Lichtleitfaser (4) unter zum Schmelzen des Endbereiches führender Temperaturerhöhung gegen ein plattenförmiges Gegenstück (8) gedrückt wird,
**dadurch gekennzeichnet,** daß der Lichtleitfaser (4) zur Erhitzung Schwingungsenergie zugeführt wird.

2. Verfahren nach Anspruch 1,
**dadurch gekennzeichnet,** daß die Schwingungsenergie in die Lichtleitfaser (4) von einer Sonotrode (7) über eine plattenförmige Gegenfläche (8) eingekoppelt wird,

3. Verfahren nach Anspruch 1 oder 2,
**dadurch gekennzeichnet,** daß die Schwingungsenergie über eine Ultraschall-Sonotrode in die Lichtleitfaser (4) eingekoppelt wird.

4. Verfahren nach einem der Ansprüche 1 bis 3,
**dadurch gekennzeichnet,** daß mit der in die Lichtleitfaser (4) eingekoppelten Schwingungsenergie in der Lichtleitfaser (4) innere Reibung hervorgerufen wird, die zum Schmelzen des Endbereiches führt, der an der Gegenfläche (8) der Sonotrode (7) anliegt.

5. Verfahren nach einem der Ansprüche 1 bis 4,
**dadurch gekennzeichnet,** daß die Gegenfläche (8) auf eine Temperatur unterhalb der Schmelztemperatur der Lichtleitfaser (4) vorgeheizt wird.

6. Verfahren nach einem der Ansprüche 1 bis 5,
**dadurch gekennzeichnet,** daß dem Endbereich zur Erhitzung Schwingungsenergie für die Zeitdauer von wenigstens einer Sekunde zugeführt wird.

7. Verfahren nach einem der Ansprüche 1 bis 6,
**dadurch gekennzeichnet,** daß der Endbereich der Lichtleitfaser (4) nach der Zufuhr der Schwingungsenergie auf eine Temperatur unterhalb der Erstarrungstemperatur der Lichtleitfaser (4) gekühlt wird.

8. Verfahren nach einem der Ansprüche 1 bis 7,
**dadurch gekennzeichnet,** daß der Endbereich der Lichtleitfaser (4) während der Erhitzung und bis zur Erstarrung über die Gegenfläche (8) mit einer Kraft im Bereich von 1 Newton bis 10 Newton auf Druck beaufschlagt wird.

9. Verfahren nach einem der Ansprüche 1 bis 8,
**dadurch gekennzeichnet,** daß die Lichtleitfaser (7) vor der Erhitzung in eine mit einer stirnseitigen Erweiterung (5) versehenen Bohrung einer Aufnahme (2) eingeführt wird derart, daß der Endbereich nach der Erhitzung und Erstarrung die Erweiterung (5) weitgehend ausfüllt.

10. Optische Steckverbindung mit einer nach einem der vorstehenden Ansprüche hergestellten Stirnfläche einer Lichtleitfaser (4) zur Einkopplung von Licht.

11. Ultraschall-Sonotrode zur Verwendung bei der Herstellung einer glatten Stirnfläche bei einer Kunststoff-Lichtleitfaser nach einem der Ansprüche 1 bis 9,
**dadurch gekennzeichnet,** daß die Gegenfläche (8) hochgradig eben und mit optischer Güte poliert ausgebildet ist.

12. Ultraschall-Sonotrode nach Anspruch 11,
**dadurch gekennzeichnet,** daß die Gegenfläche (8) mit einer Antihaftbeschichtung versehen ist.
